# EUROPÄISCHE PATENTSCHRIFT

(11) **EP 2 927 521 B1**
(45) Veröffentlichungstag und Bekanntmachung des Hinweises auf die Patenterteilung: **11.05.2022**
(21) Anmeldenummer: 15158918.1
(22) Anmeldetag: 13.03.2015
(51) Int. Cl.: F16C 32/04

(54) **MAGNETLAGER UND WELLENLAGERUNG**
MAGNETIC BEARING AND SHAFT MOUNTING
PALIER MAGNÉTIQUE ET LOGEMENT D'ARBRE

(30) Priorität: 31.03.2014 DE 102014104531
(43) Veröffentlichungstag der Anmeldung: 07.10.2015
(73) Patentinhaber: Rieter CZ s.r.o., 562 01 Ústí nad Orlicí (CZ)
(72) Erfinder: Moravec, Milan, 56201 Usti nad Orlici (CZ); Sloupensky, Jiri, 565 53 Dolni Sloupnice (CZ); Silber, Siegfried, Dr., 4202 Kirchschlag (AT); Pröll, Andreas Josef, 4112 St. Gotthard (AT); Dirnberger, Peter, 4490 St. Florian (AT)
(74) Vertreter: Canzler & Bergmeier Patentanwälte Partnerschaft mbB

(56) Entgegenhaltungen:
- EP-A1- 0 795 950
- EP-A1- 1 939 473
- DE-A1-102005 030 724
- JP-A- 2000 205 260
- US-A- 4 652 780

## Beschreibung

Die vorliegende Erfindung betrifft ein Magnetlager zur aktiven radialen und passiven axialen Lagerung einer Welle eines Spinnrotors einer Offenend-Spinneinrichtung mit den Merkmalen des unabhängigen Anspruchs 1, sowie eine Wellenlagerung mit zumindest einem entsprechenden Magnetlager.

Aus der DE 10 2006 053 734 A1 ist ein Rotorantrieb einer Offenend-Spinnvorrichtung bekannt. Der Rotorantrieb treibt eine Welle und einen daran angeordneten Spinnrotor an. Die Welle ist Teil eines Läufers des Rotorantriebs und ist auf beiden Seiten des Rotorantriebs magnetisch gelagert. Die Lagerung erfolgt mittels jeweils zweier Permanentmagnetringe und einer definiert bestrombaren Magnetlagerspule. Mit diesen Elementen und einem induktiven Sensor wird die axiale Position des im Betrieb frei schwebenden Spinnrotors geregelt. Auf diese Weise gelingt es zwar die axiale Position der Welle und damit des Spinnrotors relativ genau bestimmen und einhalten zu können. Die radiale Position der Welle und des Spinnrotors bewegt sich dabei allerdings in einer relativ großen Toleranz. Um einen gleichmäßigen und unterbrechungsfreien Faden spinnen zu können, ist allerdings die radiale Position des Spinnrotors außerordentlich wichtig.

Aus der WO 93/05310 A1 ist eine radiale Magnetlagerung bekannt. Zwischen Polschenkeln eines Stators, die von einer Spule umgebenen sind, ist eine Welle angeordnet. Die Welle wird durch ein magnetisches Feld zwischen den Spulen radial zentriert und gehalten. Die Lagerung und Zentrierung kann mittels eines aktiven Regelungssystems erfolgen.

Aus der DE 10 2005 030 724 A1 ist ein elektrisches Magnetlagersystem, bestehend aus einer Radiallagerkomponente mit einem Wicklungssystem, einer Axiallagerkomponente, die mit einer Radiallagerkomponente in magnetischer Verbindung steht, einem ferromagnetischen Rotor und einer Signal- und Leistungselektronik bekannt. Die Axiallagerkomponente dient zur aktiven Regelung der Axiallage des Rotors, ist wicklungsfrei ausgeführt und ist durch das Wicklungssystem der Radiallagerkomponente erzielbar. Die aktive Regelung der axialen Lage des Rotors ist aufwendig und erfordert insbesondere einen großen Wellendurchmesser mit einem Absatz für die axiale Lageregelung. Für einen Spinnrotor einer Offenend-Spinneinrichtung wäre ein so großer Wellendurchmesser nicht geeignet. Aus der US 4 652 780 A ist eine Magnetlagerung nach dem Oberbegriff des Anspruchs 1 bekannt.

Aufgabe der vorliegenden Erfindung ist es eine Welle mittels eines Magnetlagers zu lagern, wobei die Welle sowohl axial als auch radial in einer definierten Position gehalten wird und für einen Spinnrotor einer Offenend-Spinneinrichtung mit sehr hohen Geschwindigkeiten, wie z.B. 200.000 Umdrehungen pro Minute eingesetzt werden kann. Die Lagerung muss dabei die Anforderungen an die exakte Lage des Spinnrotors erfüllen können, um einen gleichmäßigen und unterbrechungsfreien Faden spinnen zu können. Außerdem muss die Lagerung auch unter den staubigen Bedingungen einer Spinnerei zuverlässig arbeiten können.

Die Aufgabe wird gelöst mit einem Magnetlager mit den Merkmalen des unabhängigen Anspruchs 1, sowie einer Wellenlagerung mit den Merkmalen der Patentanspruchs 14.

Das erfindungsgemäße Magnetlager dient zur Lagerung einer Welle eines Spinnrotors einer Offenend-Spinneinrichtung. Das Magnetlager weist zur aktiven radialen magnetischen Lagerung der Welle in zwei Freiheitsgraden mehrere radial angeordnete Polschenkel eines Stators auf, die jeweils von einer Spule umgeben sind. Die Polschenkel sind derart zueinander angeordnet, dass sie eine Öffnung für die Welle freilassen. Im Bereich der Öffnung sowie auf der von der Öffnung abgewandten Seite der Spulen sind die Polschenkel miteinander verbunden.

Zur passiven axialen Lagerung der Welle ist zumindest ein Permanentmagnet zwischen den Spulen und der Öffnung angeordnet, der mit den Polschenkeln in Wirkverbindung steht. Durch die erfindungsgemäße Magnetlagerung werden eine aktive radiale magnetische Lagerung und eine passive axiale magnetische Lagerung der Welle bewirkt. Insbesondere die radiale Lage der Welle ist hierdurch sehr genau einstellbar und regulierbar. Die axiale Lagerung der Welle erfolgt passiv. Der dafür vorgesehene zumindest eine Permanentmagnet nutzt die Polschenkel sowie die Welle um eine axiale Positionierung der Welle zu erhalten. Der magnetische Fluss, welcher durch den Permanentmagneten erzielt wird, hält durch die dabei entstehende Kraftwirkung die Welle weitgehend exakt in ihrer axialen Lage fest. Um eine Kraft in radialer Richtung zu erzeugen, werden zwei gegenüberliegende Spulen bestromt. Hierdurch kreuzt der magnetische Fluss einen Luftspalt zwischen den entsprechenden Polschenkeln und der Welle und schließt damit das Joch, welches die Polschenkel auf der von der Öffnung abgewandten Seite der Spulen miteinander verbindet. Hierdurch wird auf einer Seite der magnetische Fluss der Spule auf den magnetischen Fluss des Permanentmagneten addiert und auf der anderen Seite wird der magnetische Fluss der Spule von dem Fluss des Permanentmagneten abgezogen. Der Fluss des Permanentmagneten kreuzt dabei nicht den Elektromagnetfluss der Spule. Die Lagerung kann hierdurch sehr effektiv und beispielsweise mit geringen Stromwärmeverlusten arbeiten.

In einer vorteilhaften Ausführung der Erfindung sind vier Polschenkel vorgesehen, welche zu einem Statorkreuz miteinander verbunden sind. Jeweils 2 gegenüberliegende Polschenkel wirken dabei mit deren Spulen derart zusammen, dass sie einen Magnetfluss erzeugen, welcher entlang der gegenüberliegenden Polschenkel und der äußeren Verbindung der Polschenkel verläuft.

Vorteilhafterweise ist die äußere Verbindung der Polschenkel ein Statorring, welcher die Polschenkel auf der von der Öffnung abgewandten Seite der Spulen miteinander verbindet. Der Statorring ermöglicht dabei den entsprechenden Kraftfluss, welcher die beiden gegenüberliegenden Polschenkel und deren Spulen zusammenwirken lässt. Jeweils zwei gegenüberliegende Polschenkel mit ihren Spulen halten die Welle in einem Freiheitsgrad gelagert. Durch die kreuzförmige Anordnung der vier Polschenkel ist die Welle in beiden Freiheitsgraden radial gehalten.

Besonders vorteilhaft ist es, dass die Polschenkel im Bereich der Öffnung für die Welle mit dünnen, beispielsweise 0,5 bis 1 mm breiten Sättigungsstegen miteinander verbunden sind. Diese Sättigungsstege, welche benachbarte Polschenkel miteinander verbinden, bewirken, dass Wirbelstromverluste im Rotor minimiert werden, da die Flussdichteverteilung im Luftspalt zwischen Stator und Welle sehr homogen wird. Die Sättigungsstege sind direkt an dem Spalt zwischen den Polschenkeln und der in der Öffnung befindlichen Welle angeordnet. Durch einen zweiten Sättigungssteg, welcher beabstandet zu dem ersten Sättigungssteg angeordnet ist, wird eine hohe mechanische Stabilität in das Magnetlager gebracht, da hierdurch die Polschenkel stabil zusammengehalten werden. Die Sättigungsstege weisen vorteilhafterweise eine Breite auf, welche so gering ist, dass sie nahezu vollständig durch den Magnetfluss des Permanentmagneten gesättigt sind. Durch die Sättigungsstege entsteht ein Hauptfluss zwischen dem Statorkreuz und der dazwischen befindlichen Welle und nicht um die Welle herum. Ausgestanzte Langlöcher zwischen den Polschenkeln erzeugen jeweils zwei dünne Sättigungsstege.

Der Permanentmagnet, welcher sowohl für die radiale aktive und die axiale passive Lagerung der Welle vorgesehen ist, ist vorzugsweise ein Ring, der die Öffnung umgibt. Es können hierbei auch mehrere Ringe vorgesehen sein, beispielsweise auch, dass ein Permanentmagnetring auf einer Seite des Stators und, in axialer Richtung der Welle gesehen, der andere Permanentmagnetring auf der anderen Seite des Stators angeordnet ist. Alternativ kann auch vorgesehen sein, dass mehrere Permanentmagnete ringförmig um die Öffnung herum angeordnet sind. Durch den Permanentmagnetring wird ein Magnetfluss erzeugt, welcher die Welle in axialer Richtung positionieren kann.

Der radiale Abstand des bzw. der Permanentmagnete vom Zentrum der Offnung ist größer als der Radius der Öffnung. So entsteht ein Spalt zwischen dem Permanentmagneten und der Welle, welcher größer ist als der Spalt zwischen dem Stator und der Welle. Diese Bauweise unterstützt die axiale Magnetisierung zur besseren Lenkung der Flussrichtung des Permanentmagneten.

Dem bzw. den Permanentmagneten ist an der dem Polschenkel abgewandten Seite ein Leitring zur Leitung des magnetischen Flusses zugeordnet. So ist es möglich, dass der magnetische Fluss von dem Permanentmagneten ausgehend entlang des Leitringes geführt wird. Durch den Leitring kann der magnetische Fluss über einen Luftspalt in die Welle eingeleitet werden und über einen weiteren Luftspalt und den Stator zu dem Permanentmagneten zurückgeführt werden.

Der innere Durchmesser des Leitrings ist im Wesentlichen gleich dem Durchmesser der Öffnung der Polschenkel für die Welle. So kann einerseits der Magnetfluss gezielt geleitet werden. Andererseits ist es auch möglich, dass die Welle von beiden Seiten in das Lager eingeführt und aus dem Lager wieder ausgeführt werden kann, um beide Bauteile entsprechend montieren zu können.

Ist in axialer Richtung der Welle zwischen den Polschenkeln und dem Leitring ein Abstand vorgesehen, so dient auch dies der Führung des magnetischen Flusses des Permanentmagneten.

Ist der Abstand zwischen den Polschenkeln und dem Leitring mit einem, insbesondere aus Kunststoff hergestellten, Füllring weitgehend ausgefüllt, so dient dies insbesondere zur Stabilisierung der mechanischen Konstruktion und der Befestigung von Polschenkel, Permanentmagnet und Leitring miteinander.

Sind den Spulen Sensoren und eine Regelungseinrichtung zugeordnet, um die zwei radialen Freiheitsgrade der Welle aktiv zu regeln, so wird die Lage der Welle bezüglich ihrer beiden radialen Freiheitsgrade mit hoher Genauigkeit eingehalten. Bereits geringe Abweichungen der Welle von ihrer vorgesehenen zentralen Lage führen dazu, dass die Sensoren diese Abweichung erkennen und über die Regelungseinrichtung die Spulen entsprechend mehr oder weniger bestromt werden, um einen Ausgleich der Lage der Welle zu schaffen.

Vorzugsweise steht mit den Polschenkeln, dem Permanentmagneten und dem Leitring ein ferromagnetisches Bauteil, insbesondere ein Ring in Wirkverbindung, der mit der Welle fest verbunden ist. Hierdurch wird der magnetische Fluss über den Permanentmagneten, den Leitring, das ferromagnetische Bauteil und die Polschenkel geschlossen. Die axiale Fixierung der Welle ist damit stabil zu erzielen. Bei einem axialen Ausweichen der Welle entsteht eine erhöhte Kraft, welche bewirkt, dass die Welle mit ihrem ferromagnetischen Bauteil wieder in die Gleichgewichtslage, welche der gewünschten axialen Position der Welle entspricht, zurückgebracht wird.

Ist die Dicke bzw. Wandstärke der Polschenkel geringer als die dem ferromagnetischen Bauteil zugewandte Breite des Leitrings, so wird ein besonders vorteilhafter magnetischer Fluss erzielt, welcher für die stabile Position der Welle in ihrer axialen Lage sorgt, da durch den breiteren Leitring die Flussdichte unter dem Leitring kleiner als im Luftspalt des Stators wird.

Weist das ferromagnetische Bauteil eine dem Permanentmagneten zugewandte Nut auf, so dient auch dies der Einhaltung einer stabilen axialen Position der Welle, da der Magnetfluss hierdurch besonders stark auf die Position der Welle einwirkt. Polschenkel und Leitring fixieren dadurch die Welle stärker in ihrer vorgesehenen axialen Stellung.

Vorteilhafterweise ist die Nut in dem ferromagnetischen Bauteil zwischen den Polschenkeln und dem Leitring angeordnet. Sowohl der Leitring als auch die Polschenkel wirken dabei in beiden axialen Richtungen stabilisierend auf die Welle ein.

In einer besonders vorteilhaften Ausführung des Magnetlagers sind die stationären Bauteile der Magnetlagerung an einem Träger angeordnet und bilden eine kompakte Baueinheit. Die Baueinheit kann damit einfach montiert und bei Bedarf schnell ausgewechselt werden.

Ist das Magnetlager mit Abdeckungen zum Schutz vor Verschmutzungen und als Hilfsträger zur Befestigung einzelner Bauteile der Magnetlagerung versehen so ist für einen weitgehend störungsfreien Betrieb des Magnetlagers auch in besonders staubiger Umgebung, wie sie für den Einsatz in Spinnereimaschinen zu erwarten ist, vorteilhaft. Die Abdeckung kann als Deckel und die Hilfsträger können als Führungsstangen ausgebildet sein.

Weist die Baueinheit eine Platine zur Aufnahme der Sensoren und oder einer Elektronik zur Regulierung der radialen magnetischen Lagerung der Welle auf, so kann vorteilhafterweise eine sehr kompakte Bauweise der Baueinheit erzielt werden.

Weist die Platine in vorteilhafter Weise eine Steckverbindung auf, mit welcher die Platine mit einer übergeordneten Platine zur Steuerung und Spannungsversorgung verbunden ist, so ist auch hierdurch eine kompakte Bauweise des Magnetlagers zu erzielen. Kabelverbindungen zwischen den einzelnen Platinen können damit vermieden werden.

Ist zwischen den Spulen und der Platine eine Abschirmplatte angeordnet, so ist sichergestellt, dass keine elektromagnetischen Störungen durch die Spulen auf die Elektronik der Platine einwirken können.

Eine Welle einer erfindungsgemäßen Wellenlagerung ist zur Lagerung mit zumindest einem Magnetlager mit einem oder mehreren der zuvor beschriebenen Merkmale vorgesehen. Dabei ist die Welle ein Verbundbauteil, welches zumindest teilweise aus nicht-ferromagnetischem Material besteht. Das nicht-ferromagnetische Material kann Metall, z.B. Edelstahl oder Aluminium, oder Nichtmetall, z.B. GFK oder CFK, oder ein anderes Verbundmaterial sein. Im Bereich der radialen sowie gegebenenfalls axialen Lagerung ist ein Bauteil aus einem ferromagnetischen Material an der Welle angeordnet. Das ferromagnetische Material dient zur Leitung des Magnetflusses für die axiale und die radiale Lagerung der Welle durch das Magnetlager. Es sorgt für einen gezielten magnetischen Fluss, welcher die Welle in ihrer radialen und axialen Position halten kann. Durch die Abgrenzung des ferromagnetischen und nicht-ferromagnetischen Materials auf der Welle ist insbesondere die axiale Lagerung der Welle in besonders vorteilhafter Weise zu bewirken. Die Grenze zwischen dem ferromagnetischen und dem nicht-ferromagnetischen Material sorgt für eine entsprechende Positionierung gegenüber einem Permanentmagneten und gegebenenfalls einem Leitring sowie den Polschenkeln. Die Welle ist mit ihrem ferromagnetischen Material sehr exakt im Bereich dieser Bauteile des Magnetlagers zu halten.

Weist das Bauteil aus ferromagnetischen Material eine umlaufende Nut auf, so dient dies zur steifen axialen Fixierung der Welle gegenüber dem Magnetlager, da der Magnetfluss gezielt auf das Bauteil und damit die Welle einwirken kann.

Ist die Nut außermittig des Bereichs der axialen Lagerung angeordnet, so wird ein besonders günstiger Magnetfluss erzielt, welcher wiederum zur Stabilität der axialen Lagerung der Welle beiträgt.

Ist das Bauteil aus ferromagnetischem Material in Form eines Ringes oder Stiftes ausgebildet, so kann hiermit die Welle als Verbundbauteil auf sehr einfache Art und Weise hergestellt und montiert werden.

Ist an einem Ende der Welle ein Rotortopf angeordnet, so kann die Welle als Schaft eines Offenend-Spinnrotors verwendet werden.

Einer der Vorteile der Welle und des dazugehörigen Magnetlagers ist es, dass die Welle im Wesentlichen zylindrisch ausgebildet sein kann, ohne dass sie große Durchmesserunterschiede aufweist. Auch die Ringe bzw. Stifte aus ferromagnetischem Material auf der Welle können weitgehend dem restlichen Außendurchmesser der Welle entsprechen. Dies ermöglicht eine sehr einfache Montage und Demontage der Welle in und aus dem Magnetlager. Scheibenartige große Vorsprünge der Welle wie beim Stand der Technik für Spinnrotoren sind nicht erforderlich.

Eine erfindungsgemäße Wellenlagerung ist für einen drehbaren Schaft eines Spinnrotors in einer Offenend-Spinneinrichtung vorgesehen. Die erfindungsgemäße Wellenlagerung weist zur passiven axialen Lagerung eines Freiheitsgrades der Welle und zur aktiven radialen Lagerung zweier Freiheitsgrade der Welle zumindest ein, vorzugsweise zwei Magnetlager mit einem oder mehreren der zuvor beschriebenen Merkmale auf. Insbesondere wenn das Magnetlager als kompakte Baueinheit ausgebildet ist, ist hierdurch eine sehr vorteilhafte Wellenlagerung geschaffen. Vorzugsweise ist zwischen den beiden Magnetlagerungen ein Antriebsmotor angeordnet, welcher ein Antriebsmoment auf die Welle überträgt. Durch die entsprechende Anordnung von zwei Magnetlagern mit einem dazwischen angeordneten Antriebsmotor ist eine kompakte und gegen Verschmutzung geschützte Bauweise geschaffen.

Weist die Wellenlagerung vorteilhafterweise zwei Magnetlager auf, wobei ein erstes der beiden Magnetlager nach einem oder mehreren der vorherigen Ansprüche ausgebildet ist und das zweite Magnetlager lediglich zur radialen magnetischen Lagerung der Welle ausgebildet ist, d.h. keinen Permanentmagneten zur axialen Lagerung der Welle aufweist, ist eine sehr einfach herstellbare und kostengünstige Ausführung der Wellenlagerung geschaffen. Eine derartige Wellenlagerung ist ausreichend, wenn an die axiale Positionierung der Welle keine allzu hohen Anforderungen gestellt werden.

Weist die Wellenlagerung ein einziges Magnetlager mit einem oder mehreren der zuvor beschriebenen Merkmale auf und erfolgt die weitere radiale Abstützung der Welle mittels eines Antriebsmotors, der zusätzlich zum Antriebsmoment auch Radialkräfte erzeugen kann, so ist auch hierdurch häufig eine ausreichend stabile Lagerung der Welle zu erhalten.

Vorzugsweise ist das Magnetlager in einer kompakten Baueinheit angeordnet und ist damit Teil der Wellenlagerung. Hierdurch ist die Montage und Austauschbarkeit der Wellenlagerung sehr einfach möglich.

Zur Steuerung und Spannungsversorgung der Magnetlager Baueinheiten ist es besonders vorteilhaft, wenn integrierte Platinen über Steckverbindungen mit einer übergeordneten Platine zur Steuerung und Spannungsversorgung verbunden sind. Diese Steckverbindungen sind vorzugsweise ohne dazwischen angeordnete Kabel ausgeführt. Beschädigungen der Kabel oder auch elektromagnetische Störungen werden hierdurch weitgehend vermieden.

Weitere Vorteile der Erfindung sind in den nachfolgenden Ausführungsbeispielen beschrieben. Es zeigt
- **Figur 1**: einen Stator,
- **Figur 2**: den Stator aus Figur 1 mit Spulen an den Polschenkeln des Stators,
- **Figur 3**: eine Schnittdarstellung durch ein erfindungsgemäßes radiales und axiales Magnetlager,
- **Figur 4**: eine perspektivische Explosionsdarstellung des erfindungsgemäßen axialen Magnetlagers,
- **Figur 5**: eine perspektivische Explosionsdarstellung einer erfindungsgemäßen Baueinheit eines radialen und axialen Magnetlagers,
- **Figur 6**: eine perspektivische Darstellung einer Anordnung von Sensoren,
- **Figur 7**: eine perspektivische Explosionsdarstellung einer Welle mit Spinnrotor,
- **Figur 8**: eine schematische Darstellung einer Wellenlagerung mit Rotor,
- **Figur 9**: eine weitere Variante einer Wellenlagerung mit Rotor und
- **Figur 10**: eine weitere Variante einer Wellenlagerung mit Rotor.

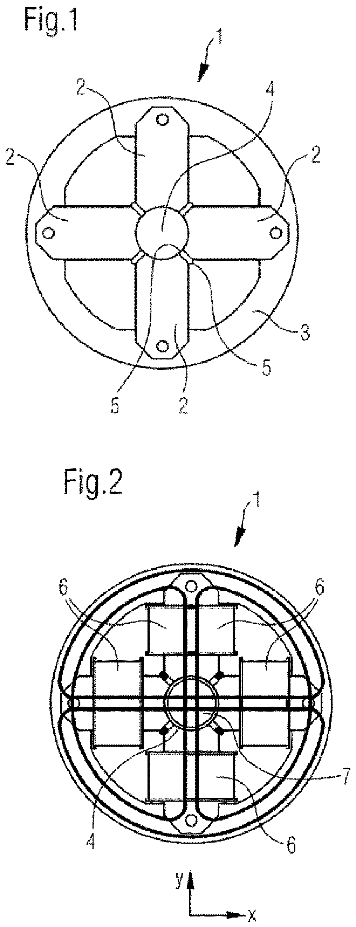

In Figur 1 ist ein Stator 1 dargestellt, welcher vier Polschenkel 2 aufweist, die als Statorkreuz miteinander verbunden sind. Am äußeren Ende der Polschenkel 2 ist ein Statorring 3 angeordnet, welcher alle Polschenkel 2 umgibt. Am anderen Ende der Polschenkel 2 ist eine Öffnung 4 vorgesehen, welche eine hier nicht dargestellte Welle aufnehmen kann. Die Polschenkel 2 sind an ihrem inneren Ende mittels Sättigungsstegen 5 miteinander verbunden. Ein erster Sättigungssteg 5 ist nahe der Öffnung 4 angeordnet, während ein zweiter Sättigungssteg 5 in einem größeren Abstand von der Öffnung 4 vorgesehen ist. Jeweils zwei Sättigungsstege 5 verbinden zwei benachbarte Polschenkel 2. Die Sättigungsstege 5 sind so ausgeführt, dass der Spulenfluss im Wesentlichen nicht über die Sättigungsstege 5 bzw. die dazwischen angeordneten benachbarten Polschenkel 2, sondern durch die dann in der Öffnung 4 angeordnete Welle fließt. Ein Vormagnetisierungsfluss durch einen Permanentmagneten würde ohne die Sättigungsstege 5 durch die nichthomogene Verteilung der Flussdichte im Luftspalt Wirbelströme in der Welle und damit Verluste erzeugen. Die Sättigungsstege bewirken bei geeigneter Dimensionierung eine homogene Verteilung der durch einen Permanentmagnet 10 erzeugten Flussdichte so, dass in der Welle ferromagnetisches Vollmaterial (Bezug) verwendet werden kann. Die Sättigungsstege 5 dienen somit einerseits einem optimalen Magnetfluss und andererseits auch der Stabilität des Statorkreuzes.

Der Stator 1 ist aus zwei Teilen hergestellt, welche jeweils aus laminierten Stahlblechen bestehen. Das erste Teil ist das Statorkreuz aus den vier Polschenkeln 2 und das zweite Teil ist der Statorring 3. Beide Teile sind miteinander, beispielsweise mittels einer Pressung, verbunden.

In Figur 2 ist der Stator 1 aus Figur 1 mit montierten Spulen 6 dargestellt. Auf jeden Polschenkel 2 des Statorkreuzes ist eine Spule 6 aufgesteckt. Sodann wird das Statorkreuz aus den vier Polschenkeln 2 mit dem Statorring 3 verbunden. Hierdurch wird eine stabile Einheit geschaffen, welche für die radiale Lagerung einer durch die Öffnung 4 hindurchragenden Welle 7 geeignet ist.

Werden die Spulen 6 mit Strom beaufschlagt, so entsteht ein magnetischer Spulenfluss, welcher zur aktiven Positionierung der Welle 7 in ihrer radialen Position verwendet werden kann. Zur Erzeugung von Kräften werden die gegenüberliegenden Spulen 6 gleichzeitig, aber in unterschiedlicher Richtung bestromt. Hierdurch entstehen magnetische Spulenflüsse, wie sie in Figur 2 eingezeichnet sind. Die Überlagerung des Spulenflusses mit dem Permanentmagnetfluss bewirkt eine Vergrößerung der Flussdichte auf einer Wellenseite sowie eine Reduktion der Flussdichte auf der gegenüberliegenden Seite und damit eine Kraftwirkung auf die Welle. Dadurch, dass jeweils zwei Spulen 6 in einer Achse und die beiden anderen Spulen 6 rechtwinkelig dazu in einer anderen Achse ausgerichtet sind, wird die Welle 7 in ihren beiden Freiheitsgraden in x-Richtung und in y-Richtung gelagert.

Durch die Sättigungsstege 5 verläuft der Spulenfluss 8 im Wesentlichen durch die Welle 7 und es wird eine Kraft auf die Welle 7 erzeugt. Durch eine Änderung des Stromes wird die Lage der Welle 7 innerhalb der Öffnung 4 beeinflusst. Diese Regelung erfolgt mit später noch detaillierter beschriebenen Sensoren, welche die Lage der Welle 7 feststellen und damit die benötigte Stromstärke für die Spulen 6 berechnet werden kann, um die Welle wieder in die gewünschte Lage zu bringen.

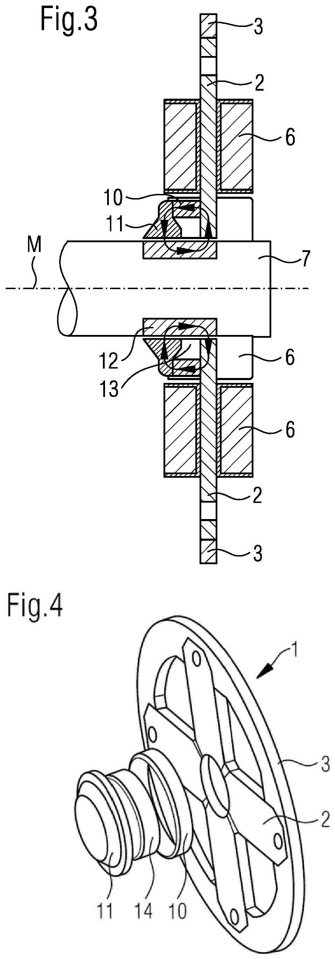

In Figur 3 ist ein Schnitt durch ein Magnetlager gemäß Figur 2 dargestellt, welches zusätzlich zu einem radialen auch ein axiales Lager aufweist. Das radiale Lager besteht unter anderem aus den hier dargestellten Polschenkeln 2 und den darauf aufgesteckten Spulen 6. Zwischen den Spulen 6 und der Welle 7 ist an den Polschenkeln 2 ein Permanentmagnet 10 angeordnet. Der Permanentmagnet 10 ist ringförmig ausgestaltet und umgibt somit die Welle 7 und ist in axialer Richtung magnetisiert.

An dem von den Polschenkeln 2 abgewandten Ende ist an dem Permanentmagneten 10 ein ferromagnetischer Leitring 11 angeordnet. Leitring 11 weist eine größere Breite als die Polschenkel 2 auf. Dadurch ist die Flussdichte im Luftspalt im Bereich des Leitrings wesentlich kleiner als im Luftspaltbereich des Stators 1. Dies wirkt sich wiederum vorteilhaft auf die negative Steifigkeit des Lagers aus und verbessert die Regelbarkeit. Der innere Durchmesser des Leitrings 11 entspricht im Wesentlichen dem Durchmesser der Öffnung 4 des Statorkreuzes. Zwischen dem inneren Durchmesser des Leitrings 11 und der Öffnung 4 des Statorkreuzes und der Welle 7 ist ein kleiner Spalt vorhanden, welcher die kontaktlose Drehung der Welle 7 um ihre Mittellinie M erlaubt.

Die Welle 7 ist aus einem nicht-ferromagnetischen Material hergestellt. Auf der Welle 7 ist einen Ring 12 angeordnet und mit dieser fest verbunden. Der Ring 12 besteht aus einem ferromagnetischen Material. Dieser Ring 12 ist dem Leitring 11 und dem Statorkreuz, d.h. den Stirnseiten der vier Polschenkel 2 zugeordnet. Durch den Permanentmagneten 10 entsteht ein Magnetfluss, welcher durch den Leitring 11 in den Ring 12 und über die Polschenkel 2 zurück zum Permanentmagneten 10 verläuft. Versucht die Welle 7 in axialer Richtung aus der vorgesehenen Lage heraus zu gelangen, so bewirkt der Permanentmagnetfluss, dass die Welle 7 möglichst in ihrer axialen Position verbleibt.

Durch eine in den Ring 12 eingebrachte Nut 13, welche dem Permanentmagneten 10 zugewandt ist, wird die axiale Stabilisierung der Welle 7 verbessert. Eine Abweichung der Welle 7 in axialer Richtung führt hierdurch zu einer verstärkten rückstellenden Kraft, welche die Welle 7 in ihrer axialen Position zu halten versucht. Die axiale Lagerung ist passiv, d.h. es findet keine Regelung der Position statt. Die axiale Position ist somit in Bezug auf die Polschenkel 2 und den Leitring 11 sowie dem ihnen zugeordneten Ring 12 der Welle 7 selbsteinstellend.

In Figur 4 ist eine perspektivische Explosionsdarstellung des Stators 1 mit der passiven axialen Lagerung dargestellt. Hieraus ist ersichtlich, dass der Permanentmagnet 10 ringförmig ausgebildet ist. Weiterhin ist der Leitring 11 dargestellt, welcher in zusammengebautem Zustand an dem Permanentmagnet 10 angeordnet ist. In dem hier dargestellten Ausführungsbeispiel ist zwischen dem Permanentmagneten 10 und den Leitring 11 ein Füllring 14 vorgesehen. Der Füllring 14 ist für die Funktion des Lagers nicht unbedingt erforderlich, führt aber dennoch zu einer größeren Stabilität des axialen Lagers. Der Füllring 14 ist aus Kunststoff bzw. nicht ferromagnetischen Material hergestellt um die Magnetflusslinien nicht zu beeinflussen.

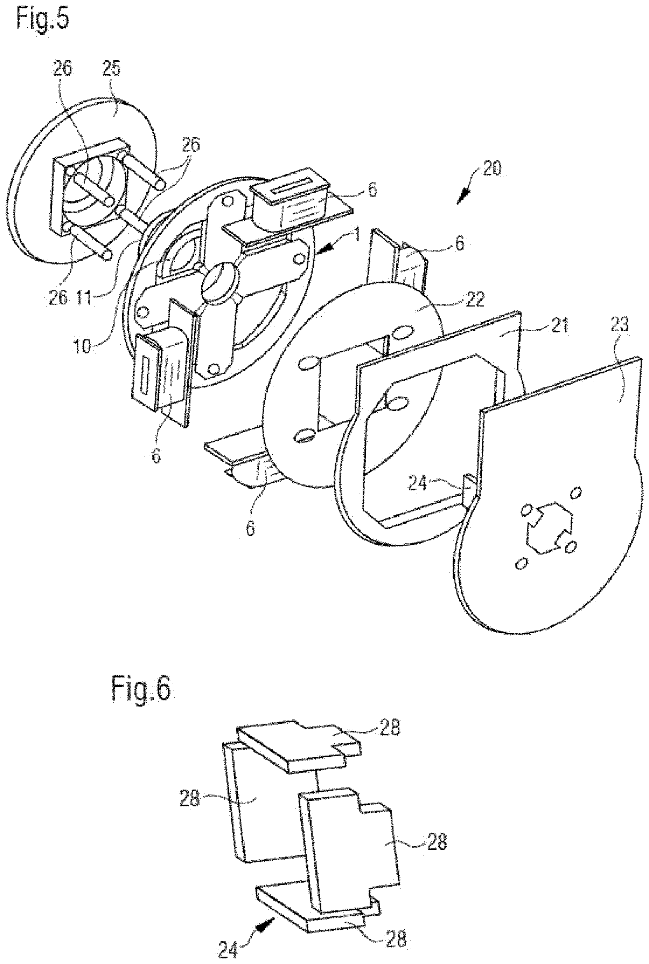

Figur 5 ist eine perspektivische Explosionsdarstellung einer kompakten Baueinheit 20 des radialen und axialen Lagers dargestellt. Kernstück der Baueinheit 20 bildet der zuvor beschriebenen Stator 1 und seine Spulen 6 sowie der Permanentmagnet 10 und der Leitring 11. Die Spulen sind in dieser Darstellung nicht auf die Polschenkel 2 aufgesteckt. Zwischen dem radialen Lager und einem Träger 21, welcher die Baueinheit 20 am Maschinengestell oder Motor befestigt, ist eine Abschirmplatte 22 vorgesehen. Die Abschirmplatte 22 dient der Abschirmung elektromagnetischer Strahlung gegenüber einer Platine 23, welche die Baueinheit 20 abschließt.

Auf der Platine 23 ist eine nicht dargestellte Elektronik angeordnet, welche für den Betrieb der radialen Lagerung vorgesehen ist. Auf der Platine 23 ist darüber hinaus ein Sensor 24 angeordnet, welcher die Lage der Welle 7 überwacht. Der Sensor 24 besteht in dem hier dargestellten Beispiel aus vier auf Leiterplatten integrierten Wirbelstromsensoren, welche den Abstand zu der Welle 7 feststellen können. Auf der Platine 23 ist weiterhin eine hier nicht dargestellte Steckverbindung vorgesehen, mit welcher die Platine 23 in eine weitere, später erläuterte Platine zur Steuerung und Spannungsversorgung der Wellenlagerung eingesteckt werden kann.

Zusammengehalten wird die Baueinheit 20 durch einen an dem der Platine 23 gegenüberliegenden Ende der Baueinheit 20 vorgesehenen Deckel 25 und Befestigungstiften 26, welche durch die Baueinheit 20 hindurchragen. Deckel 25 und Platine 23 werden mit den dazwischen angeordneten Bauteilen ineinander gesteckt und mittels der Befestigungsstifte 26 verspannt, um somit eine kompakte Baueinheit 20 zu bilden.

In Figur 6 ist der Sensor 24 schematisch dargestellt. Der Sensor 24 besteht aus vier Leiterplatten 28, welche um die Welle 7 herum angeordnet sind. Auf den Leiterplatten 28 integrierte Wirbelstromsensoren weisen jeweils eine Spule auf, die von hochfrequentem Wechselstrom durchflossen wird. Dabei werden in der Welle 7 Wirbelströme induziert, wodurch sich der Wechselstromwiderstand der Spule ändert. Der Abstand der Welle 7 von der Sensorspule ist proportional zu einem elektrischen Signal, das durch die Impedanzänderung erzeugt wird. Dieses elektrische Signal wird überwacht. Sobald sich das Signal ändert, wird über eine Regelung der Stromstärke in den Spulen 6 der Lagerung bewirkt, dass die Welle 7 möglichst zentral zwischen den Leiterplatten 28 gehalten wird.

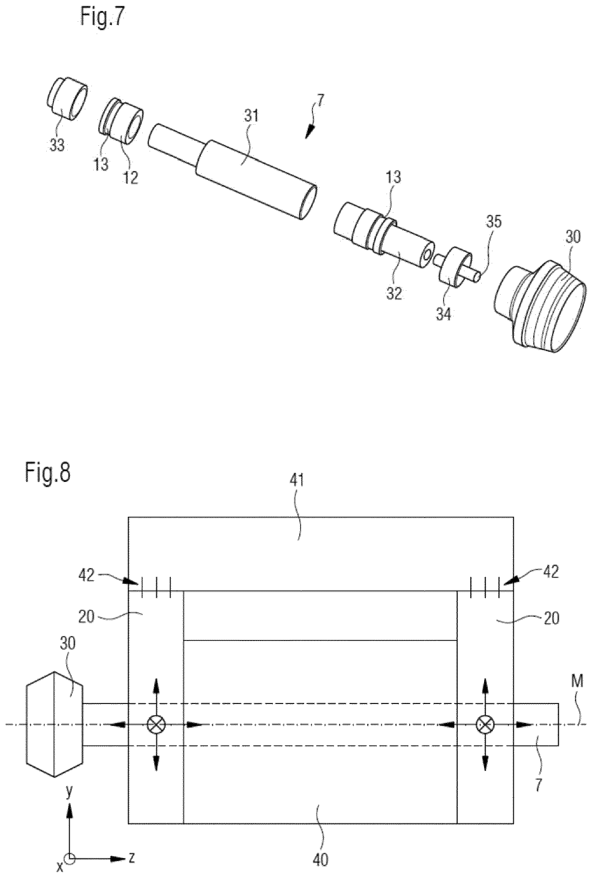

Figur 7 zeigt eine Explosionsdarstellung eines Spinnrotors mit einer Welle 7 und einem Spinntopf 30. Die Welle 7 ist eine Verbundwelle, welche aus einer zentralen, nicht-ferromagnetischen Aufnahme 31 besteht. Die Aufnahme 31 nimmt einerseits den Ring 12 und andererseits einen Stift 32 auf. Sowohl Ring 12 als auch Stift 32 weisen die Nut 13 auf, mit welcher zusammen mit dem Ring 12 und dem Stift 32 die axiale Lagerung der Welle 7 erfolgt.

Ring 12 und Stift 32 sind aus ferromagnetischem Material hergestellt. Die Aufnahme 31 wird abgeschlossen durch eine nicht-ferromagnetische Kappe 33. Auf dem Stift 32 ist eine nicht-ferromagnetische Hülse 34 aufgesteckt. Kappe 33, Aufnahme 31 und Hülse 34 schaffen jeweils einen nicht-ferromagnetischen Abschluss gegenüber dem Ring 12 bzw. dem ringförmigen Abschnitt des Stiftes 32, wodurch eine axiale Fixierung der Welle 7 gegenüber dem Permanentmagnet 10 und dem Leitring 11 erfolgt. In dem Stift 32 ist weiterhin ein hier schematisch dargestelltes Befestigungselement 35 vorgesehen, mit welchem der Spinntopf 30 mit dem Stift 32 und damit mit der Welle 7 verbunden werden kann.

In Figur 8 ist schematisch der Aufbau einer Wellenlagerung mit einem Motor 40 dargestellt. Die Welle 7 ragt durch zwei Baueinheiten 20 und den dazwischen angeordneten Motor hindurch. Jede der Baueinheiten 20 ist in der Lage die Welle 7 sowohl aktiv radial in zwei Freiheitsgraden als auch passiv axial in einem Freiheitsgrad magnetisch zu lagern. Die Lagerrichtungen sind mit Pfeilen angedeutet. Der Motor 40 erzeugt eine Antriebsdrehung der Welle 7, mit welcher der Spinntopf 30 in Drehbewegung um die Mittellinie M gebracht wird. Über Steckverbindungen 42 sind die Baueinheiten 20 elektrisch mit einer Steuerung 41 verbunden. Die Steuerung 41 dient zur Steuerung von Motor 40 und Lagerung sowie zu deren Spannungsversorgung.

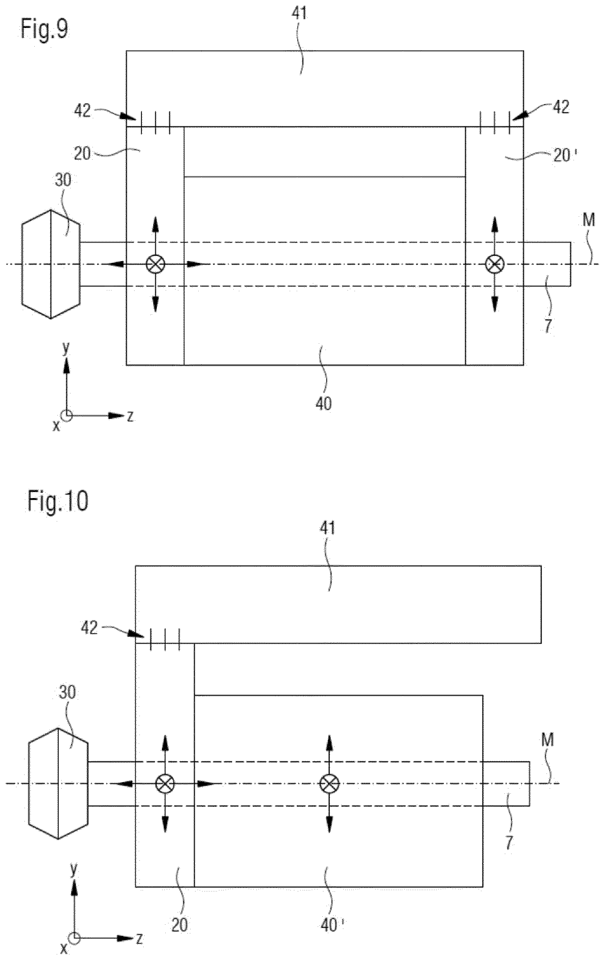

In Figur 9 ist eine weitere Alternative der Wellenlagerung dargestellt. Hier ist ähnlich wie in Figur 8 der Motor 40 mit zwei Baueinheiten 20 versehen, welche über Steckverbindungen 42 mit der Steuerung 41 verbunden sind. Im Unterschied zur Figur 8 ist allerdings die von dem Spinntopf 30 abgewandte Baueinheit 20 nicht mit einer axialen Lagerung mit Permanentmagnet 10 versehen. Hierdurch ist diese Baueinheit 20' lediglich in der Lage aktiv eine radiale Lagerung der Welle 7 zu erzeugen. Die axiale Lagerung erfolgt ausschließlich durch die dem Spinntopf 30 zugewandte Baueinheit 20 wie zuvor beschrieben.

In Figur 10 ist wiederum eine weitere Ausführung einer Wellenlagerung dargestellt. Hier ist die Welle 7 mit lediglich einer einzigen Baueinheit 20 axial und radial gelagert. Im Gegensatz zu den beiden vorherigen Ausführungsbeispielen ist der Motor 40' hier in der Lage zusätzlich zum Antriebsmoment auch Radialkräfte erzeugen zu können. Hierdurch wird die Welle 7 durch den Motor 40' zusätzlich zu der Baueinheit 20 radial zentriert. Eine zweite Baueinheit 20 oder 20' ist hierdurch nicht erforderlich.

Die Erfindung ist nicht auf die hier dargestellten Ausführungsbeispiele beschränkt, sondern ist nur durch die angehängten Ansprüche beschränkt.

## Patentansprüche

1. Magnetlager zur aktiven radialen und passiven axialen Lagerung einer Welle (7) eines Spinnrotors einer Offenend-Spinneinrichtung, welches zur aktiven radialen magnetischen Lagerung der Welle (7) in zwei Freiheitsgraden mehrere Polschenkel (2) eines Stators (1) aufweist, die jeweils von einer Spule (6) umgeben und radial zueinander angeordnet sind, wobei die Polschenkel (2) derart angeordnet sind, dass sie eine Öffnung (4) für die Welle (7) freilassen, wobei die Polschenkel (2) im Bereich der Öffnung (4) sowie auf der von der Öffnung (4) abgewandten Seite der Spulen (6) miteinander verbunden sind und, insbesondere zur passiven axialen Lagerung der Welle (7), zumindest ein Permanentmagnet (10) zwischen den Spulen (6) und der Öffnung (4) angeordnet ist, **dadurch gekennzeichnet, dass** der zumindest eine Permanentmagnet (10) mit den Polschenkeln (2) in Wirkverbindung steht, dass der radiale Abstand des zumindest einen Permanentmagneten (10) vom Zentrum der Öffnung (4) größer ist als der Radius der Öffnung (4) und dass dem zumindest einen Permanentmagneten (10) an der dem Polschenkel (2) abgewandten Seite ein ferromagnetischer Leitring (11) zur Leitung des elektromagnetischen Flusses zugeordnet ist, wobei der innere Durchmesser des Leitrings (11) im Wesentlichen dem Durchmesser der Öffnung (4) der Polschenkel (2) für die Welle (7) entspricht.

2. Magnetlager nach dem vorherigen Anspruch, **dadurch gekennzeichnet, dass** vier Polschenkel (2) zu einem Statorkreuz verbunden sind.

3. Magnetlager nach einem oder mehreren der vorherigen Ansprüche, **dadurch gekennzeichnet, dass** ein Statorring (3) die Polschenkel (2) auf der von der Öffnung (4) abgewandten Seite der Spulen (6) miteinander verbindet.

4. Magnetlager nach einem oder mehreren der vorherigen Ansprüche, **dadurch gekennzeichnet, dass** die Polschenkel (2) im Bereich der Öffnung (4) für die Welle (7) mit dünnen Sättigungsstegen (5) miteinander verbunden sind.

5. Magnetlager nach einem oder mehreren der vorherigen Ansprüche, **dadurch gekennzeichnet, dass** der Permanentmagnet (10) ein Ring ist, der die Öffnung (4) umgibt.

6. Magnetlager nach einem oder mehreren der vorherigen Ansprüche, **dadurch gekennzeichnet, dass** in axialer Richtung der Welle (7) zwischen den Polschenkeln (2) und dem Leitring (11) ein Abstand vorgesehen ist.

7. Magnetlager nach Anspruch 6, **dadurch gekennzeichnet, dass** der Abstand weitgehend mit einem Füllring (14) ausgefüllt ist.

8. Magnetlager nach einem oder mehreren der vorherigen Ansprüche, **dadurch gekennzeichnet, dass** den Spulen (6) Sensoren (28) und eine Regelungseinrichtung zugeordnet sind, um die zwei radialen Freiheitsgrade der Welle (7) aktiv zu regeln.

9. Magnetlager nach einem oder mehreren der vorherigen Ansprüche, **dadurch gekennzeichnet, dass** mit den Polschenkeln (2), dem Permanentmagneten (10) und dem Leitring (11) ein ferromagnetisches Bauteil, insbesondere ein Ring (12), in Wirkverbindung steht.

10. Magnetlager nach Anspruch 9, **dadurch gekennzeichnet, dass** die Dicke der Polschenkel (2) geringer ist als die dem ferromagnetischen Bauteil zugewandte Breite des Leitrings (11).

11. Magnetlager nach einem oder mehreren der vorherigen Ansprüche, **dadurch gekennzeichnet, dass** stationäre Bauteile der Magnetlagerung an einem Träger (21) angeordnet sind und eine kompakte Baueinheit (20) bilden und/oder dass das Magnetlager mit Abdeckungen (25) zum Schutz vor Verschmutzung und als Hilfsträger zur Befestigung einzelner Bauteile der Magnetlagerung versehen ist.

12. Magnetlager nach Anspruch 11, **dadurch gekennzeichnet, dass** die Baueinheit (20) eine Platine (23) zur Aufnahme der Sensoren (28) und/oder einer Elektronik zur Regulierung der radialen magnetischen Lagerung der Welle (7) aufweist und/oder die Platine (23) eine Steckverbindung (42) aufweist zur Verbindung der Platine (23) mit einer übergeordneten Platine zur Steuerung und Spannungsversorgung.

13. Magnetlager nach Anspruch 12, **dadurch gekennzeichnet, dass** zwischen den Spulen (6) und der Platine (23) eine Abschirmplatte (22) angeordnet ist.

14. Wellenlagerung, mit einem drehbaren Schaft eines Spinnrotors in einer Offenend-Spinneinrichtung, wobei der drehbare Schaft eine Welle (7) der Wellenlagerung ist, **dadurch gekennzeichnet, dass** die Wellenlagerung zur passiven axialen Lagerung eines Freiheitsgrades der Welle (7) und zur aktiven radialen Lagerung zweier Freiheitsgrade der Welle (7) zumindest ein, vorzugsweise zwei, Magnetlager nach einem oder mehreren der vorherigen Ansprüche aufweist.

15. Wellenlagerung nach dem vorherigen Anspruch, **dadurch gekennzeichnet, dass** das Magnetlager in einer kompakten Baueinheit (20) angeordnet ist.

16. Wellenlagerung nach einem oder mehreren der vorherigen Ansprüche 14 bis 15, **dadurch gekennzeichnet, dass** die Wellenlagerung zwei Magnetlager aufweist, wobei das Erste der beiden Magnetlager nach einem der vorherigen Ansprüche ausgebildet ist und das zweite Magnetlager lediglich zur radialen magnetischen Lagerung der Welle ausgebildet ist und keinen Permanentmagneten (10) zur axialen Lagerung aufweist.

17. Wellenlagerung nach einem oder mehreren der vorherigen Ansprüche 14 bis 16, **dadurch gekennzeichnet, dass** die Wellenlagerung ein Magnetlager nach einem der vorherigen Ansprüche aufweist und die weitere radiale Abstützung der Welle mittels eines Antriebsmotors (40), der zusätzlich zum Antriebsmoment auch Radialkräfte erzeugen kann, erfolgt.

18. Wellenlagerung nach einem oder mehreren der vorherigen Ansprüche 14 bis 17, **dadurch gekennzeichnet, dass** zwei Magnetlager-Baueinheiten (20) mittels integrierter Platinen (23) über Steckverbindungen (42) mit einer übergeordneten Platine zur Steuerung und Spannungsversorgung verbunden sind.

19. Wellenlagerung nach einem oder mehreren der Ansprüche 14 bis 18, **dadurch gekennzeichnet, dass** die Welle (7) ein Verbundbauteil ist, welches zumindest teilweise aus nicht ferromagnetischem Material besteht und dass an der Welle (7) im Bereich der radialen sowie gegebenenfalls axialen Lagerung ein Bauteil aus einem ferromagnetischen Material mit einer umlaufende Nut (13) angeordnet ist und dass an einem Ende der Welle (7) ein Rotortopf (30) eines Spinnrotors einer Offenend-Spinneinrichtung angeordnet ist.

20. Wellenlagerung nach dem vorherigen Anspruch, **dadurch gekennzeichnet, dass** die umlaufende Nut (13) außermittig des Bereichs der axialen Lagerung angeordnet ist.

21. Wellenlagerung nach einem oder mehreren der vorherigen Ansprüche 19 bis 20, **dadurch gekennzeichnet, dass** das Bauteil aus ferromagnetischem Material in Form eines Ringes (12) oder Stiftes (32) ausgebildet ist.

22. Wellenlagerung nach einem oder mehreren der vorherigen Ansprüche 19 bis 21, **dadurch gekennzeichnet, dass** die Nut (13) zwischen den Polschenkeln (2) und dem Leitring (11) angeordnet ist.

## Claims

1. Magnetic bearing for the active radial and passive axial mounting of a shaft (7), for a spinning rotor of an open-end spinning device, which features several pole shanks (2) of a stator (1) for the active radial magnetic mounting of the shaft (7) in two degrees of freedom, which in each case are surrounded by a coil (6) and are radially arranged to each other, whereas the pole shanks (2) are arranged in such a manner that they release an opening (4) for the shaft (7), the pole shanks (2) being connected to each other in the area of the opening (4), and on the side of the coils (6) turned away from the opening (4), and in particular, for the passive axial mounting of the shaft (7), at least one permanent magnet (10) is arranged between the coils (6) and the opening (4), **characterized in that** the permanent magnet (10) is in operative connection with the pole shanks (2), that the radial distance of the at least one permanent magnet (10) from the center of the opening (4) is larger than the radius of the opening (4) and that a ferromagnetic guide ring (11) is allocated to the at least one permanent magnet (10) at the side turned away from the pole shank (2) for the guiding of the electromagnetic flux, whereas the inner diameter of the guide ring (11) essentially corresponds to the diameter of the opening (4) of the pole shanks (2) for the shaft (7).

2. Magnetic bearing according to the preceding claim, **characterized in that** four pole shanks (2) are connected to a stator cross.

3. Magnetic bearing according to one or more of the preceding claims, **characterized in that** a stator ring (3) connects the pole shanks (2) to each other on the side of the coils (6) turned away from the opening (4).

4. Magnetic bearing according to one or more of the preceding claims, **characterized in that** the pole shanks (2) are connected to each other in the area of the opening (4) for the shaft (7) with thin saturation bars (5).

5. Magnetic bearing according to one or more of the preceding claims, **characterized in that** the permanent magnet (10) is a ring that surrounds the opening (4).

6. Magnetic bearing according to one or more of the preceding claims, **characterized in that** a gap is provided in an axial direction of the shaft (7) between the pole shanks (2) and the guide ring (11).

7. Magnetic bearing according to claim 6, **characterized in that** the gap is largely filled out with a filling ring (14).

8. Magnetic bearing according to one or more of the preceding claims, **characterized in that** sensors (28) and a control device are allocated to the coils (6) in order to actively control the two radial degrees of freedom of the shaft (7).

9. Magnetic bearing according to one or more of the preceding claims, **characterized in that**, with the pole shanks (2), the permanent magnet (10) and the guide ring (11), a ferromagnetic component, in particular a ring (12) is in operative connection.

10. Magnetic bearing according to claim 9, **characterized in that** the thickness of the pole shanks (2) is less than the width of the guide ring (11) turned towards the ferromagnetic component.

11. Magnetic bearing according to one or more of the preceding claims, **characterized in that** the stationary components of the magnetic mounting are arranged on a carrier (21) and form one compact structural unit (20) and/or that the magnetic bearing is provided with covers (25) for protection from dirt and as subcarriers for the fastening of individual components of the magnetic mounting.

12. Magnetic bearing according to claim 11, **characterized in that** the structural unit (20) features a circuit board (23) for the attachment of the sensors (28) and/or an electronics assembly for the control of the radial magnetic mounting of the shaft (7) and/or the circuit board (23) features a plug connection (42) for the connection of the circuit board (23) to a superordinate circuit board for control and power supply.

13. Magnetic bearing according to claim 12, **characterized in that** a shielding plate (22) is arranged between the coils (6) and the circuit board (23).

14. A shaft mounting having a rotatable shaft of a spinning rotor in an open-end spinning device, whereas the rotatable shaft is a shaft (7) of the shaft mounting, **characterized in that** the shaft mounting features, for the passive axial mounting of one degree of freedom of the shaft (7) and for the active radial mounting of two degrees of freedom of the shaft (7), at least one, preferably two, magnetic bearings according to one or more of the preceding claims.

15. The shaft mounting according to the preceding claim, **characterized in that** the magnetic bearing is arranged in a compact structural unit (20).

16. The shaft mounting according to on or more of the preceding claims 14 to 15, **characterized in that** the shaft mounting features two magnetic bearings, whereas a first of the two magnetic bearings is formed according to one or more of the preceding claims and the second magnetic bearing is formed solely for the radial magnetic mounting of the shaft, and does not feature any permanent magnet (10) for the axial mounting.

17. The shaft mounting according to one or more of the preceding claims 14 to 16, **characterized in that** the shaft mounting features a magnetic bearing according to one of the preceding claims, and that the additional radial support of the shaft is effected by means of a drive motor (40), which may also generate radial forces for the drive torque.

18. The shaft mounting according to one or more of the preceding claims 14 to 17, **characterized in that** two magnetic bearing structural units (20) are connected by means of integrated circuit boards (23) through plug connections (42) to a superordinate circuit board for control and power supply.

19. The Shaft mounting according to one or more of claims 14 to 18, **characterized in that** the shaft (7) is a composite component which consists at least partially of non-ferromagnetic material, and **in that** a component made of a ferromagnetic material with a circumferential groove (13) is arranged on the shaft (7) in the area of the radial and, if appropriate, axial bearing, and **in that** a rotor pot (30) of a spinning rotor of an open-end spinning device is arranged at one end of the shaft (7).

20. The shaft mounting according to the previous claim, **characterized in that** the circumferential groove (13) is arranged eccentrically of the area of the axial bearing.

21. The shaft mounting according to one or more of the preceding claims 19 to 20, **characterized in that** the component is made of ferromagnetic material in the form of a ring (12) or pin (32).

22. The shaft mounting according to one or more of the preceding claims 19 to 21, **characterized in that** the groove (13) is arranged between the pole shanks (2) and the guide ring (11).

## Revendications

1. Palier magnétique pour le logement radial actif et axial passif d'un arbre (7) d'un rotor de filage d'un dispositif de filage à fibres libérées, qui présente plusieurs branches polaires (2) d'un stator (1) pour le logement magnétique radial actif de l'arbre (7) dans deux degrés de liberté, qui sont chacune entourées par une bobine (6) et disposées radialement les unes par rapport aux autres, dans lequel les branches polaires (2) sont disposées de sorte qu'elles laissent libre une ouverture (4) pour l'arbre (7), dans lequel les branches polaires (2) sont reliées les unes avec les autres dans la zone de l'ouverture (4) ainsi que sur le côté des bobines (6) opposé à l'ouverture (4) et, en particulier pour le logement axial passif de l'arbre (7), au moins un aimant permanent (10) est disposé entre les bobines (6) et l'ouverture (4), **caractérisé en ce que** le, au moins un, aimant permanent (10) est en liaison fonctionnelle avec les branches polaires (2), **en ce que** la distance radiale de l'au moins un aimant permanent (10) par rapport au centre de l'ouverture (4) est supérieure au rayon de l'ouverture (4) et **en ce qu'**un anneau conducteur ferromagnétique (11) est attribué à l'au moins un aimant permanent (10) sur le côté opposé à la branche polaire (2) pour la conduction du flux électromagnétique, le diamètre intérieur de l'anneau conducteur (11) correspondant essentiellement au diamètre de l'ouverture (4) des branches polaires (2) pour l'arbre (7).

2. Palier magnétique selon la revendication précédente, **caractérisé en ce que** quatre branches polaires (2) sont reliées en une croix statorique.

3. Palier magnétique selon l'une quelconque ou plusieurs des revendications précédentes, **caractérisé en ce qu'**un anneau (3) de stator relie les branches polaires (2) les unes avec les autres sur le côté des bobines (6) opposé à l'ouverture (4).

4. Palier magnétique selon l'une quelconque ou plusieurs des revendications précédentes, **caractérisé en ce que** les branches polaires (2) sont reliées les unes aux autres au niveau de l'ouverture (4) pour l'arbre (7) par de minces barres de saturation (5).

5. Palier magnétique selon l'une quelconque ou plusieurs des revendications précédentes, **caractérisé en ce que** l'aimant permanent (10) est un anneau qui entoure l'ouverture (4).

6. Palier magnétique selon l'une quelconque ou plusieurs des revendications précédentes, **caractérisé en ce que**, dans la direction axiale de l'arbre (7), un écart est prévu entre les branches polaires (2) et l'anneau conducteur (11).

7. Palier magnétique selon la revendication 6, **caractérisé en ce que** l'écart est largement rempli par un anneau de remplissage (14).

8. Palier magnétique selon l'une quelconque ou plusieurs des revendications précédentes, **caractérisé en ce que** des capteurs (28) et un dispositif de régulation sont attribués aux bobines (6) pour réguler activement les deux degrés de liberté radiaux de l'arbre (7).

9. Palier magnétique selon l'une quelconque ou plusieurs des revendications précédentes, **caractérisé en ce qu'**un composant ferromagnétique, en particulier une bague (12), est en liaison fonctionnelle avec les branches polaires (2), l'aimant permanent (10) et l'anneau conducteur (11).

10. Palier magnétique selon la revendication 9, **caractérisé en ce que** l'épaisseur des branches polaires (2) est inférieure à la largeur de l'anneau conducteur (11) orientée vers le composant ferromagnétique.

11. Palier magnétique selon l'une quelconque ou plusieurs des revendications précédentes, **caractérisé en ce que** des composants stationnaires du logement magnétique sont disposés sur un support (21) et forment une unité de construction compacte (20) et/ou **en ce que** le palier magnétique est pourvu de recouvrements (25) pour la protection contre les salissures et en tant que support auxiliaire pour la fixation de composants individuels du palier magnétique.

12. Palier magnétique selon la revendication 11, **caractérisé en ce que** l'unité de construction (20) présente une platine (23) destinée à accueillir les capteurs (28) et/ou une électronique pour la régulation du logement magnétique radial de l'arbre (7) et/ou la platine (23) présente un raccord à emboîtement (42) destiné à relier la platine (23) à une platine supérieure pour la commande et l'alimentation en tension.

13. Palier magnétique selon la revendication 12, **caractérisé en ce qu'**une plaque de blindage (22) est disposée entre les bobines (6) et la platine (23).

14. Logement d'arbre, avec un arbre rotatif d'un rotor de filage dans un dispositif de filage à fibres libérées, dans lequel l'arbre rotatif est un arbre (7) du logement d'arbre, **caractérisé en ce que** le logement d'arbre présente, pour le logement axial passif d'un degré de liberté de l'arbre (7) et pour le logement radial actif de deux degrés de liberté de l'arbre (7), au moins un, de préférence deux, paliers magnétiques selon l'une quelconque ou plusieurs des revendications précédentes.

15. Logement d'arbre selon la revendication précédente, **caractérisé en ce que** le palier magnétique est disposé dans une unité de construction compacte (20).

16. Logement d'arbre selon l'une quelconque ou plusieurs des revendications 14 à 15 précédentes, **caractérisé en ce que** le logement d'arbre comporte deux paliers magnétiques, le premier des deux paliers magnétiques étant réalisé selon l'une quelconque des revendications précédentes et le deuxième palier magnétique étant réalisé uniquement pour le logement magnétique radial de l'arbre et ne comportant pas d'aimant permanent (10) pour le logement axial.

17. Logement d'arbre selon l'une quelconque ou plusieurs des revendications 14 à 16 précédentes, **caractérisé en ce que** le logement d'arbre présente un palier magnétique selon l'une quelconque des revendications précédentes et le soutien radial supplémentaire de l'arbre est réalisé au moyen d'un moteur d'entraînement (40) qui peut également générer des forces radiales en plus du couple d'entraînement.

18. Logement d'arbre selon l'une quelconque ou plusieurs des revendications 14 à 17 précédentes, **caractérisé en ce que** deux unités de construction de paliers magnétiques (20) sont reliées à une platine supérieure pour la commande et l'alimentation en tension au moyen de platines intégrées (23) via des raccords à emboîtement (42).

19. Logement d'arbre selon l'une quelconque ou plusieurs des revendications 14 à 18 précédentes, **caractérisé en ce que** l'arbre (7) est un composant composite qui est constitué au moins partiellement d'un matériau non ferromagnétique et **en ce qu'**un composant en un matériau ferromagnétique avec une rainure circonférentielle (13) est disposé sur l'arbre (7), dans la zone du logement radial ainsi que, le cas échéant, axial, et **en ce qu'**un pot de rotor (30) d'un rotor de filage d'un dispositif de filage à fibres libérées est disposé à une extrémité de l'arbre (7).

20. Logement d'arbre selon la revendication précédente, **caractérisé en ce que** la rainure circonférentielle (13) est excentrée par rapport à la zone du logement axial.

21. Logement d'arbre selon l'une quelconque ou plusieurs des revendications 19 à 20 précédentes, **caractérisé en ce que** le composant est réalisé en un matériau ferromagnétique sous la forme d'une bague (12) ou d'une broche (32).

22. Logement d'arbre selon l'une quelconque ou plusieurs des revendications 19 à 21 précédentes, **caractérisé en ce que** la rainure (13) est disposée entre les branches polaires (2) et l'anneau conducteur (11).
